# EUROPEAN PATENT APPLICATION

(11) **EP 1 770 309 A1**
(43) Date of publication of application: **04.04.2007**
(21) Application number: 05753319.2
(22) Date of filing: 22.06.2005
(51) Int. Cl.: F16H 55/36, F16C 33/66, F16D 41/06, C10M 169/06, C10M 115/08, C10M 117/02, C10M 129/58, C10M 129/76, C10M 135/10, C10N 10/04, C10N 30/00, C10N 30/06, C10N 30/08, C10N 30/12, C10N 40/02, C10N 40/04, C10N 50/10

(54) **ROTATION TRANSMISSION APPARATUS WITH BUILT-IN ONE-WAY CLUTCH**

(30) Priority: 23.06.2004 JP 2004185458; 06.08.2004 JP 2004230598; 16.11.2004 JP 2004331922
(71) Applicant: NSK LTD., Shinagawa-ku, Tokyo 141-8560 (JP)
(72) Inventor: NAKATANI, Shinya c/o NSK LTD., Kanagawa 251-8501 (JP); SAKAGAMI, Kentarou c/o NSK LTD., Kanagawa 251-8501 (JP); TODA, Yuujirou c/o NSK LTD., Kanagawa 251-8501 (JP); SATOU, Marmorou c/o NSK LTD., Kanagawa 251-8501 (JP)
(74) Representative: Grünecker, Kinkeldey, Stockmair & Schwanhäusser Anwaltssozietät
(86) International application number: PCT/JP2005/011458
(87) International publication number: WO 2006/001309

(57) **Abstract**

In order to provide a one-way clutch-containing rotation transmission apparatus of a high performance and an excellent durability, which shows a satisfactory lubricating property in a one-way clutch and a rolling bearing over a wide temperature range from a low temperature to a high temperature, in which an antirust agent for preventing a corrosion by rainwater or the like has little environmental burden and which does not cause an exfoliation of metal materials under a vibrating condition, a grease composition, employing a synthetic oil as a base oil, also employing at least either of an urea compound and a metal soap as a thickener and containing a non-barium type antirust agent in an amount of from 1.0 to 10 mass % with respect to the entire amount of the grease, is sealed in the rolling bearing and the one-way clutch.

## Description

### TECHNICAL FIELD

The present invention relates to a one-way clutch-containing rotation transmission apparatus.

### RELATED ART

The one-way clutch-containing rotation transmission apparatus is constituted by mounting a one-way clutch and a rolling bearing between a pair of rotary members disposed concentrically, and is used as a pulley or the like, to be mounted on a rotary shaft of an automotive auxiliary equipment such as an alternator, a crank shaft of an engine to be mounted on an idling-stop car or a rotary shaft of an auxiliary equipment driving device, for power transmission between the rotary shaft and a belt supported on an external periphery.

As a grease composition for use in such one-way clutch-containing rotation transmission apparatus, various materials have been proposed (Patent References 1 to 4).

Patent Reference 1 discloses a grease composition utilizing ether oil as a base oil, in case of assembling a one-way clutch-containing rotation transmission apparatus in an alternator, in order to prevent an exfoliation in a metal-to-metal contact portion in the rolling bearing or in the one-way clutch by a vibration transmitted by the belt.

Also Patent Reference 2 discloses a grease composition having a pressure-viscosity coefficient of a specified value or higher, for use in an alternator as in Patent Reference 1, and intends, in the use in the one-way clutch, to improve a clutch-locking property and to improve an abrasion resistance in a sliding contact in case of an overrun state.

Also Patent Reference 3 discloses, as a grease composition for use in a one-way clutch employed in a starter, a grease composition utilizing silicone oil as a base oil and extra pressure additives of two types, and intends to improve the abrasion resistance in an overrun-state.

Also Patent Reference 4 discloses a technology of sealing grease compositions of different performances respectively in the one-way clutch mostly involving a sliding contact and in the rolling bearing mostly involving a rolling contact.

As described above, the grease composition for the one-way clutch-containing rotation transmission apparatus is required not only to have an excellent clutch locking property in the one-way clutch and to provide an abrasion resistance when the one-way clutch is in a sliding contact in an overrun state, but also to be suitable for lubrication of the rolling bearing. In addition, in the case that the one-way clutch-containing rotation transmission apparatus is used in an alternator or the like, it is required to prevent a fletching such as an exfoliation or the like induced in the one-way clutch or the rolling bearing under a vibrating condition.

In these respects, the grease composition disclosed in Patent Reference 1 is unsuitable for sliding lubrication and is insufficient for preventing abrasion, while the grease composition disclosed in Patent Reference 2 is insufficient for preventing abrasion or fletching. Also the grease composition disclosed in Patent Reference 3, when employed for lubrication of the rolling bearing, is difficult to achieve a long service life in the rolling bearing, since the silicone oil has a low oil film strength in comparison with other synthetic oils or mineral oils. In such case, it is conceivable to use a different grease composition in the rolling bearing as indicated in Patent Reference 4, but different grease compositions may leak out and mixed each other and may be deteriorated by softening or hardening, so that it is preferable to employ a same grease composition in the one-way clutch and the rolling bearing.

Also the alternator or the like is installed in an engine room, subjected to wide temperature conditions from a low temperature to a high temperature, and, particularly in an overrun state, the internal temperature rises to about 150°C by the sliding friction of the one-way clutch and the rotation of the rolling bearing, the grease composition is required to have a fluidity at a low temperature and a heat resistance.

Also measures have to taken against corrosion of metal materials, since water such as rainwater may intrude into the one-way clutch-containing rotation transmission apparatus when it is used in the alternator or the like. For preventing metal corrosion, it is common to add an antirust agent to the grease composition. For such antirust agent, barium-based antirust agents represented by barium sulfonate are utilized widely, but such barium-based antirust agents are now becoming to be concerned with the environmental influence.

Patent Reference 1: JP-A-11-082688
Patent Reference 2: JP-A-2000-234638
Patent Reference 3: Japanese Patent No. 3033306
Patent Reference 4: JP-A-2002-130433

### DISCLOSURE OF THE INVENTION

### PROBLEMS TO BE SOLVED BY THE INVENTION

The present invention is to solve the aforementioned drawbacks, and an object thereof is to provide a one-way clutch-containing rotation transmission apparatus of a high performance and an excellent durability, which shows a satisfactory lubricating property in a one-way clutch and a rolling bearing over a wide temperature range from a low temperature to a high temperature, in which an antirust agent for preventing a corrosion by rainwater or the like has little environmental burden and which does not cause an exfoliation of metal materials under a vibrating condition.

### MEANS FOR SOLVING THE PROBLEMS

For accomplishing the aforementioned object, the present invention provides a following one-way clutch containing rotation transmission apparatus:
(1) A one-way clutch-containing rotation transmission apparatus including a pair of rotary members disposed concentrically, a rolling bearing disposed between mutually opposed peripheral surfaces of the pair of rotary members and serving to support the pair of rotary members so as to be freely rotatable each other, and a one-way clutch disposed between the mutually opposed peripheral surfaces of the pair of rotary members and serving to transmit a rotary power for rotating one of the rotary members with respect to the other only in a predetermined direction, wherein
   a grease composition, containing a synthetic oil as a base oil, also at least either of an urea compound and a metal soap as a thickener and a non-barium type antirust agent in an amount of from 1.0 to 10 mass % with respect to the entire amount of the grease, is sealed in the rolling bearing and the one-way clutch.
(2) The one-way clutch-containing rotation transmission apparatus as described in (1), wherein
   the non-barium type antirust agent is formed by a combination of plural kinds, in which each non-barium type antirust agent is present in an amount of from 0.5 to 9.5 mass % of the entire amount of the grease.

### EFFECT OF THE INVENTION

The present invention allows to provide a one-way clutch-containing rotation transmission apparatus having a high performance and excellent in durability.

### BRIEF DESCRIPTION OF THE DRAWINGS

Fig. 1 is a cross-sectional view showing the structure of a one-way clutch-containing rotation transmission apparatus in an embodiment.
Fig. 2 is a view showing the mode of a reciprocating dynamic friction test.

### DESCRIPTION OF SYMBOLS

- 11: sleeve
- 11a: external peripheral surface
- 11A: large diameter portion
- 11B: protruding portion
- 12: pulley
- 12a: internal peripheral surface
- 2: rolling bearing
- 21: inner ring
- 22: outer ring
- 24: holder
- 25: seal
- 3: one-way clutch
- 31: clutch inner ring
- 31a: recessed portion
- 32: clutch outer ring
- 32a: flange
- 32b: internal peripheral surface
- 33: roller
- 34: clutch holder
- 34a: engaging protrusion
- G: grease composition
- S: rotary shaft

### BEST MODE FOR CARRYING OUT THE INVENTION

In the following, embodiments of the present invention will be explained with reference to the accompanying drawings.

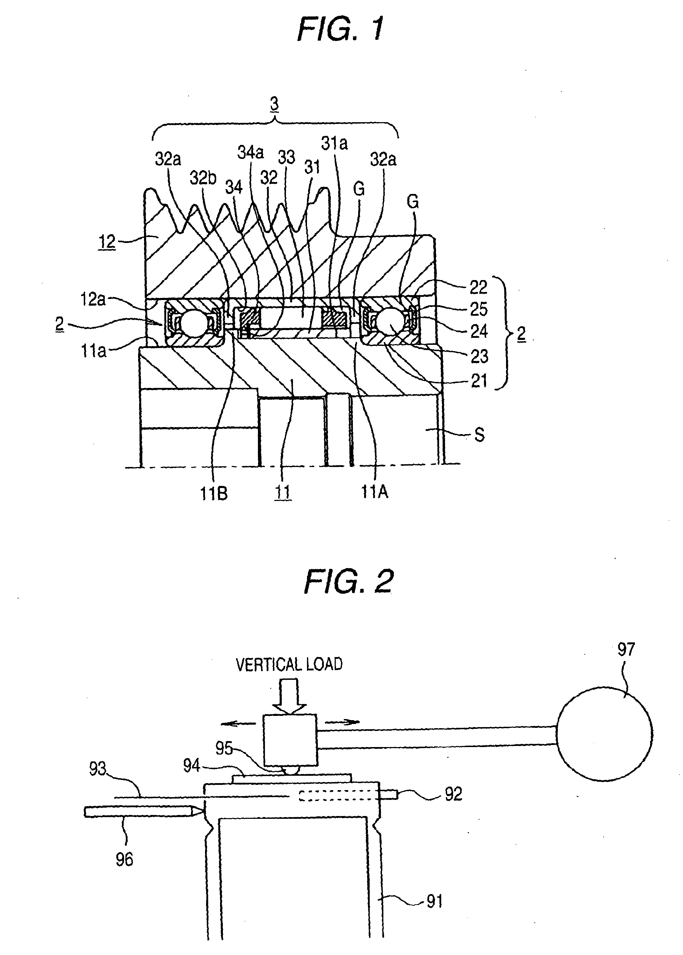

Fig. 1 is a cross-sectional view showing the structure of the one-way clutch-containing rotation transmission apparatus in an embodiment, assembled in an alternator of an automobile. The one-way clutch-containing rotation transmission apparatus is provided with a pulley (rotary member) 12, a sleeve (rotary member) 11 disposed in the radially internal side of and concentrically with the pulley 12, and rolling bearings 2, 2 and a one-way clutch 3 which are disposed between an external peripheral surface 11a of the sleeve 11 and an internal peripheral surface 12a of the pulley 12.

The external peripheral surface of the pulley 12 has irregularities so as to have an undulating cross section along the axial direction, and supports a non-illustrated endless belt (V-belt). The endless belt is put into running by the non-illustrated driving device for the auxiliary equipment, and the pulley 12 is rotated by the running of the endless belt.

In the present embodiment, the sleeve 22 is a tubular member fitted and fixed on a rotary shaft S of the alternator, and transmits a rotary power to the rotary shaft S. In an axially intermediate part of the sleeve 11, a large diameter portion 11A of a larger external diameter is formed, and a protruding portion 11B of a still larger external diameter is formed at a radial end of the large diameter portion 11A. A power generating rotor is fixed on the rotary shaft S, and the alternator generates an electric power by the rotation of the rotary shaft S.

A pair of the rolling bearings 2, 2 are respectively fitted on axial ends of the sleeve 11. Each rolling bearing 2 is a deep-groove ball bearing having an inner ring 21, an outer ring 22, balls (rolling members) 23, a holder 24 and a pair of seals ...25, 25, and a grease composition G of the present invention is filled in a closed space, positioned between the inner ring 21 and the outer ring 22 and closed by the pair of seals 25, 25. The composition of the grease composition will be explained later.

The one-way clutch 3 is disposed in the axially intermediate part of the sleeve 11, namely adjacent to and between the pair of rolling bearings 2, 2 fitted on the both axial ends thereof. In its structure, it is provided with a clutch inner ring 31, a clutch outer ring 32, plural rollers 33 disposed between the external peripheral surface of the clutch inner ring 31 and the internal peripheral surface 32b of the clutch outer ring 32, and a clutch holder 34 for holding the rollers 33, and a grease composition G, same as that sealed in the rolling bearings 2, 2, is filled between the external peripheral surface of the clutch inner ring 31 and the internal peripheral surface 32b of the clutch outer ring 32.

The clutch inner ring 31 is externally fitted on the large diameter portion 11A of the sleeve 11, and an external peripheral surface thereof constitutes a cam surface, having, on an ordinary cylindrical surface, recessed portions 31a of a number same as that of the rollers 33 at equal distances along the circumferential direction. The clutch outer ring 32 is fitted on an internal peripheral surface of the pulley 12, opposed to the clutch inner ring 31, has an internal peripheral surface formed by an ordinary cylindrical surface, and is provided on both ends thereof with a pair of inward directed flanges 32a.

The plural rollers 33 are disposed, circumferentially displaceably, respectively between the recessed portions 31a of the clutch inner ring 31 and the internal peripheral surface 32b of the clutch outer ring 32, and the external peripheral surface of the recessed portions 31a of the clutch inner ring 31 and the internal peripheral surface 32b of the clutch outer ring 32 constitutes sliding surfaces for the roller 33. The recessed portion 31a of the clutch inner ring 31 is so formed that the gap thereof to the internal peripheral surface 32b of the opposed clutch outer ring 32 becomes gradually wider (or narrower) along the circumferential direction. Such gap is, in a narrowest portion, smaller than the diameter of the roller 33, and, in a widest portion, larger than the diameter of the roller 33. Therefore, the roller 33 is pinched in the narrowest gap and rolls in the vicinity of the narrowest gap, but, outside such vicinity, the gap becomes relatively large, so that the roller slides or slides under rotation.

The clutch holder 34 supports the rollers 33 of a number same as that of the recessed portions 31a of the clutch inner ring 31, at approximately same distances along the circumferential direction and in such a manner that the rollers 33 are capable of the displacement described above. Referring to Fig. 1, the clutch holder 34 is provided at an end portion thereof with an engaging protrusion 34a, protruding toward the sleeve 11, which is disposed between a protrusion 11B of the sleeve 11 and the clutch inner ring 31 to suppress a displacement of the clutch holder 34 in the axial direction.

In the clutch holder 34, a spring is provided on a pillar portion (not shown) to exert such a force as to pressurize the rollers 33 toward a direction where the gap between the recessed portion 31a of the clutch inner ring 31 and the internal peripheral surface of the clutch outer ring 32 opposed thereto becomes narrower.
Now, the function of the one-way clutch-containing rotation transmission apparatus of the above-described structure will be explained.

When the pulley 12 executes a relative rotation in a predetermined direction by the running of the endless belt, the clutch outer ring 32 fitted internally therein rotates in the predetermined direction, whereby the roller 33 moves toward a direction where the gap between the recessed portions 31a of the clutch 31 and the internal peripheral surface 32b of the clutch outer ring 32 becomes narrower. Then, the roller 33, also pushed out by the spring of the clutch holder 34, becomes engaged between the recessed portion 31a of the clutch inner ring 31 and the internal peripheral surface 32b of the clutch outer ring 32, thereby terminating the rotation and connecting the clutch inner ring 31 and the clutch outer ring 32 (clutch locked state). Thus, the rotary power is transmitted from the pulley 12 to the sleeve 11. This state continues as long as the running speed of the endless belt remains constant or increases.

On the other hand, when the running speed of the endless belt decreases, a braking force is applied to the pulley 12 in a direction opposite to the aforementioned predetermined direction, but the sleeve 11 tends, by inertia, to continue the rotation at a constant speed in the predetermined direction. Accordingly, the roller 33 moves under a sliding contact toward a direction where the gap between the recessed portion 31a of the clutch inner ring 31 and the internal peripheral surface 32b of the clutch outer ring 32 becomes wider, whereby the locked state is released and the connection between the clutch inner ring 31 and the clutch outer ring 32 is disconnected (overrun state). In such state, the pulley 12 executes, being supported by the rolling bearings 2, 2, a relative rotation in a direction opposite to the aforementioned predetermined direction with respect to the sleeve 11.

The one-way clutch-containing rotation transmission apparatus in which the present invention is applied, is not limited to that of the above-described structure. For example it is possible, as the clutch outer ring 32, to employ a cylindrical structure without the flanges 32a, or to omit the clutch outer ring 32 and to utilize the internal peripheral surface of the pulley 12 as a raceway surface of the one-way clutch.

Also the aforementioned embodiment has explained a case employing a roller clutch as the one-way clutch 3, but, as the one-way clutch in the present invention, those of already known other structures such as a sprug clutch may be used.

Also the pair of rolling bearings 2, 2 are not limited to ball bearings, and similar effects can be obtained also in case of employing roller bearings or both of a roller bearing and a ball bearing. Also in the present embodiment, seals 25, 25 are provided on both ends of the rolling bearings 2, 2 to seal the internal spaces of the bearings, but the seal 25 may be dispensed with at one of the ends of the rolling bearings 2, 2, at the side where the one-way clutch 3 is provided.

It is also possible to use, as the rotary member, a gear instead of the pulley. Also the foregoing embodiment has explained a case where the one-way clutch-containing rotation transmission apparatus is assembled in the alternator, but the present invention is not limited to such case. For example, it may be mounted on a driven shaft of automotive auxiliary equipment other than the alternator, such as a compressor, a water pump or a cooling fan, for transmitting the driving power from an auxiliary equipment driving apparatus or an engine. Otherwise, it may be mounted on a crank shaft of an engine to be mounted on an idling-stop car and a driving shaft of an auxiliary equipment driving apparatus, and, when either one of the engine and the auxiliary equipment driving apparatus in a running state while the other is in a stopped state, it may be used to transmit the rotary power of either one in the running state but not to rotate the driving shaft of the other.

The grease composition G is formed by employing a synthetic oil as the base oil, employing at least either of an urea compound and a metal soap as a thickener and adding a non-barium type antirust agent.

Examples of the synthetic oil employable as the base oil include, because of satisfactory heat resistance and lubricating property, an ester type synthetic oil, an ether type synthetic oil, and a hydrocarbon type synthetic oil. As the ester type synthetic oil, a diester oil, a polyol ester oil, and an aromatic ester oil can be used advantageously. Specific examples of the diester oil include dioctyl adipate (DOA), diisodecyl adipate (DIBA), dibutyl adipate (DBA), dioctyl azelate (DOZ), dibutyl sebacate (DBS) and dioctyl sebacate (DOS). Also examples of the polyol ester oil include a pentaerythritol ester oil in which an alkyl group having 4 to 18 carbon atoms is introduced, a dipentaerythritol ester oil in which an alkyl group having 4 to 18 carbon atoms is introduced, a tripentaerythritol ester oil in which an alkyl group having 4 to 18 carbon atoms is introduced, a neopentyl type diol ester oil, and a trimethylolpropane ester oil. Also examples of the aromatic ester oil include trioctyl trimellitate (TOTM), tridecyl trimellitate, and tetraoctyl pyromellitate. As the ether type synthetic oil, alkyl diphenyl ether is advantageous, and, as the hydrocarbon type synthetic oil, poly-α-olefin is advantageous. Such synthetic oils may be employed singly or in a suitable mixture.

The base oil preferably has a dynamic viscosity at 40°C of from 20 to 200 mm²/s. A dynamic viscosity of the base oil less than 20 mm²/s (40°C) results in an inferior heat resistance of the grease composition, and a dynamic viscosity exceeding 200 mm²/s (40°C) leads to a large heat generation in a sliding state. A preferable dynamic viscosity of the base oil is from 20 to 100 mm²/s, and more preferably from 25 to 60 mm²/s (40°C).

In addition, the base oil preferably has a flow point of from -70 to -45°C. This is defined from a fact that the automobile has to withstand a use (engine starting) at about -40°C.

As the base oil having an excellent heat resistance, there are also known a polyphenyl ether oil, a silicone oil and a fluorinated oil, but the polyphenyl ether oil and the fluorinated oil are very expensive, and the silicone oil is generally inferior in the lubricating property, thus being unsuitable for the one-way clutch-containing rotation transmission apparatus.

As the thickener, a metal soap such as Li soap, or Li complex soap, or an urea compound may be used. Such thickener allows to satisfy the low-temperature characteristics and the heat resistance, required for the grease composition for the one-way clutch-containing rotation transmission apparatus, Among these, the urea compound is desirable because of the excellent heat resistance. As the urea compound, there may be used a diurea compound, a triurea compound, a tetraurea compound or a higher polyurea compound, among which particularly preferable is a diurea compound represented by a following formula (1):

R₁-NHCONH-R₂-NHCONH-R₃ Formula (1)

In the formula, R₁ and R₃, which may be same or different each other, each represents a hydrocarbon group having 6 to 18 carbon atoms, and R₂ represents an aromatic hydrocarbon group having 6 to 15 carbon atoms. Among these, preferred is a diurea compound in which R₁ and R₃ are cyclohexyl groups or a mixture of a cyclohexyl group and an aliphatic group. On the other hand, a diurea compound in which an aromatic group is introduced in R₁ or R₃ is liable to be cured under heating, and may be unsuitable for lubrication of a sliding part at a high temperature.

In order to maintain the base oil in a satisfactory state, a blending amount of the thickener is from 10 to 30 mass % of the entire amount of grease, preferably from 15 to 25 mass %.

As the non-barium type antirust agent, a carboxylic acid, an carboxylic acid salt, an ester compound and an amine compound are preferred. These antirust agents have an advantage of being superior also in an exfoliation resistance, in comparison with barium sulfonate. Specific examples of these will be shown below.

The carboxylic acid and carboxylic acid salt are saturated or unsaturated monocarboxylic acid, represented by CₙH₂ₙ₋₃COOH, CₙH₂ₙ₋₁COOH or CₙH₂ₙ₊₁COOH, or a metal salt thereof, wherein n represents an integer of from 10 to 20. A metal salt of a lower monocarboxylic acid having n less than 10 is liable to generate a chemical attack. Also one having n exceeding 20 results in a difficult handling, such as a lowered solubility. Examples of the metal constituting the metal salt include Na, Mg, Al, Ca and Zn. Specific examples include stearic acid, alkylsuccinic acid and derivatives thereof (for example metal salts such as of calcium, barium, magnesium, aluminum, zinc or lead), alkenylsuccinic acid and derivatives thereof (for example metal salts such as of calcium, barium, magnesium, aluminum, zinc or lead), naphthenic acid, abietic acid, and lanolin fatty acid, and alkenylsuccinic acid and zinc naphthenate are particularly preferable.

Examples of the ester type compound include a fatty acid-polyhydric alcohol partial ester, which is a partial ester of a fatty acid having 10 to 20 carbon atoms and a polyhydric alcohol such as sorbitol or pentaerythritol. Specific examples of the carboxylic acid partial ester with polyhydric alcohol include sorbitan monooleate, sorbitan trioleate, pentaerythritol monooleate, and succinic acid half ester, and sorbitan monooleate and succinic acid half ester are particularly preferable. The succinic acid half ester means succinic acid of which either one carboxylic acid alone is esterified.

As the amine type compound, examples of an amine derivative include alkoxyphenylamine, and a partial amide of a dibasic carboxylic acid. Also oxyethyleneamine represented by a following formula (2) may be utilized:

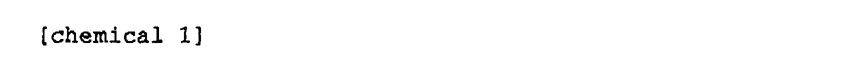

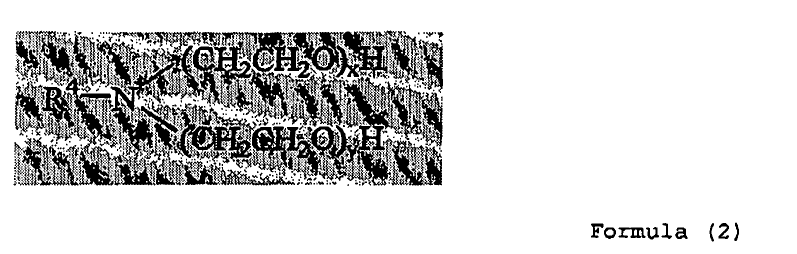

In the formula, R⁴ represents a hydrocarbon group; and x and y each represents an integer. The hydrocarbon group represented by R⁴ may be linear or branched, and preferably contains 8 to 18 carbon atoms, more preferably 8 to 16 carbon atoms, and particularly preferably 8 to 12 carbon atoms. Examples of the hydrocarbon group include an alkyl group, an alkenyl group, an aromatic group, an alicyclic group and a combination thereof, preferably an alkyl group or an alkenyl group, and particularly preferably an alkyl group. Specific examples of the hydrocarbon group include a 2-ethylexyl group, an octyl group, a decyl group, a dodecyl group, a tridecyl group, a phenyl group and a cyclohexyl group. x is preferably from 0 to 5, more preferably from 0 to 3, and particularly preferably from 0 to 2. y is preferably from 1 to 5, more preferably from 1 to 3 and particularly from 1 to 2. Oxyethyleneamine may be employed singly or in a combination of two or more kinds.

As the non-barium type antirust agent, also preferred are organic sulfonic acid salts, hydroxyfatty acids such as phenate or oleoylsarcosine, mercaptofatty acids such as 1-mercaptostearic acid and metal salts thereof, higher alcohols, thiadiazoles, imidazoles, benzotriazoles and derivatives thereof, disulfide compounds, phosphoric acid esters, and thiocarboxylic acid esters. Specific examples thereof will be shown below.

The organic sulfonic acid salt is a compound generally represented by RSO₃·M or (RSO₃)₂·M, in which M is a metal such as Ca, Zn or Na. Also examples of the organic sulfonic acid represented by RSO₃ include petroleum type sulfonic acids, alkylbenzene type sulfonic acids and dinonylnaphthalene type sulfonic acids.

Thiadiazole is a compound represented by a following formula (3).

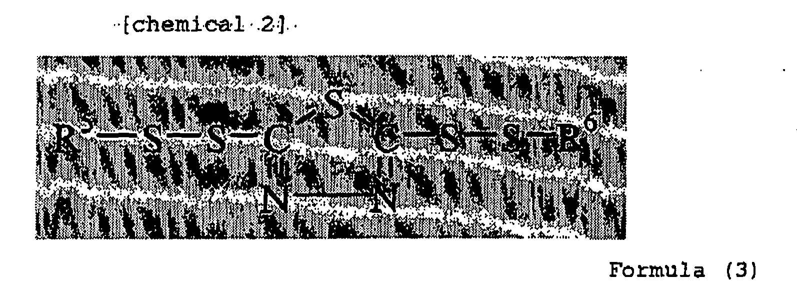

In the formula, R⁵ and R⁶, which may be same or different each other, each represents an alkyl group having 1 to 12 carbon atoms. The alkyl group, represented by R⁵ or R⁶, may be linear or branched, and preferably has 1 to 10 carbon atoms, particularly preferably 1 to 8 carbon atoms. Specific examples of the alkyl group include a methyl group, an ethyl group, a propyl group, a butyl group, a pentyl group, an isopentyl group, a hexyl group, a 2-ethylhexyl group and an octyl group. Preferred examples of thiadiazole include 2,5-dimercapto-1,3,4-thiadiazole, 2-mercaptothiadiazole, and 2,5-bis(tert-octyldithio)-1,3,4-thiadiazole. Thiadiazoles may be obtained by producing methods disclosed for example in U.S. Patents Nos. 2,719,125 and 2,719,126. Also thiadiazoles may be employed singly or in a combination of two or more kinds.

Examples of imidazoles include benzimidazole.

Benzotriazole and derivatives thereof are widely used as a corrosion suppressor. Addition of benzotriazole or a derivative thereof in the grease composition allows to significantly extend the exfoliation lifetime of copper. Preferable examples of benzotriazole and derivatives thereof include those represented by a following formula (4) and a salt thereof (such as an alkali metal salt or a silver salt), but these examples are not restrictive.

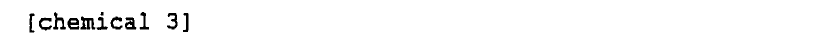

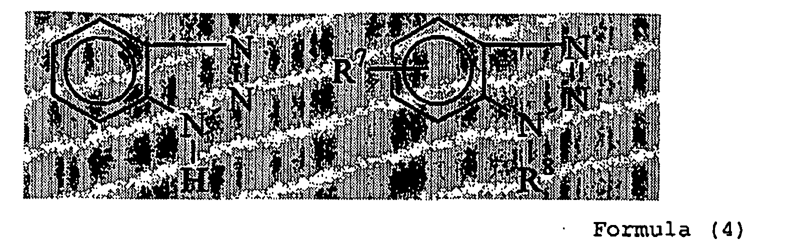

In the formula, R⁷ represents H, a halogen (such as chlorine), an alkyl group having 1 to 18 carbon atoms (such as methyl or ethyl), or COOR⁹; R° represents H, a halogen (such as chlorine), CH₂CH₂COOH, CH₂CH(OH)CH₂OH, CH (COOH) CH₂COOH, CH₂CH (COOH) CH₂COOH, or CH₂NR¹⁰R¹¹; and R⁹, R¹⁰ and R¹¹ each represents H or an alkyl group having 1 to 18 carbon atoms (such as 2-ethylhexyl or octyl).

Specific examples of benzotriazole and derivatives thereof include 1,2,3-benzotriazole, 1,H-benzotriazole, 4-methyl-1,H-benzotriazole, 4-carboxyl-1,H-benzotriazole, sodium tolytriazole, 5-methyl-1,H-benzotriazole, benzotriazole butyl ether, silver benzotriazole, 5-chloro-1,H-benzotriazole, 1-chloro-benzatriazole, 1-di(C₈H₁₇)aminomethyl-benzotriazole, 2,3-dihydroxypropyl-benzotriazole, 1,2-dicarboxyethyl-benzotriazole, (C₈H₁₇)aminomethyl-benzotriazole, bis (benzotriazol-1-yl-methyl) (C₈H₁₇) amine, N,N-bis (2-ethylhexyl)-4-methyl-1H-benzotriazole-1-methylamine, and N,N-bis(2-ethylhexyl)-5-methyl-1H-benzotriazole-1-methylamine.

Examples of disulfide compound include 2-decyldithiobenzimidazole and 2,5-bisdodecyldithiobenzimidazole.

Examples of phosphoric acid ester include trisnonylphenyl phosphite.

Examples of thiocarboxylic acid ester compound include dilauryl thiopropionate.

Such non-barium type antirust agent may be added singly or in a combination of plural kinds, but a particularly excellent antirusting effect can be obtained by utilizing plural kinds in combination. The amount of addition is from 1.0 to 10 mass % of the total grease amount, both in the case of using a single kind or using plural kinds. In case of using plural kinds, each non-barium type antirust agent is added so as to represent 0.5 to 9.5 mass %.

In the grease composition, various additive may be added. In particular, addition of an antiabrasive agent and an antioxidant is preferable.

Preferable examples of the antiabrasive agent include DTP metal compounds such as ZnDTP (zinc dithiophosphate) or MoDTP (molybdenum dithiophosphate), DTC metal compounds such as ZnDTC (zinc dithiocarbamate), NiDTC (nickel dithiocarbamate), or MoDTC (molybdenum dithiocarbamate), organic sulfur-phosphor compounds containing sulfur, phosphor and the like, and organic phosphor compounds.

Examples of the organic phosphor compound include a phosphoric acid ester represented by a following formula (5):

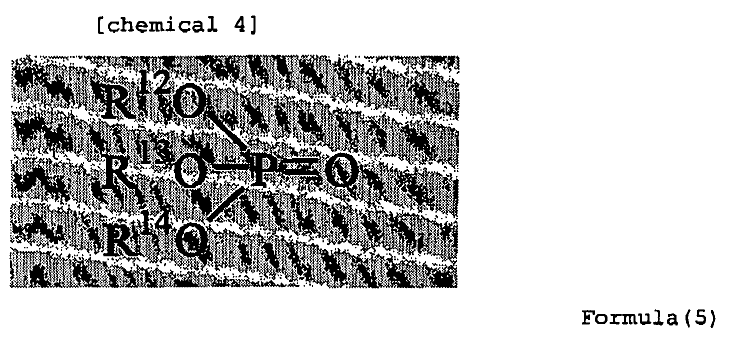

In the formula, R¹² to R¹⁴, which may be same or different each other, each represents an alkyl group having 1 to 30 carbon atoms, an alkenyl group having 2 to 30 carbon atoms, or an aryl group having 6 to 30 carbon atoms. Examples of phosphoric acid ester include tributyl phosphate, ethyl dibutyl phosphate, trihexyl phosphate, tri(2-ethylhexyl) phosphate, tridecyl phosphate, trilauryl phosphate, trimyristyl phosphate, tripalmityl phosphate, tristearyl phosphate, trioleyl phosphate, and tricresyl phosphate. Among these, tricresyl phosphate is particularly preferable.

Examples of the organic phosphor compound include an acidic phosphoric acid ester, represented by a following formula (6) or (7):

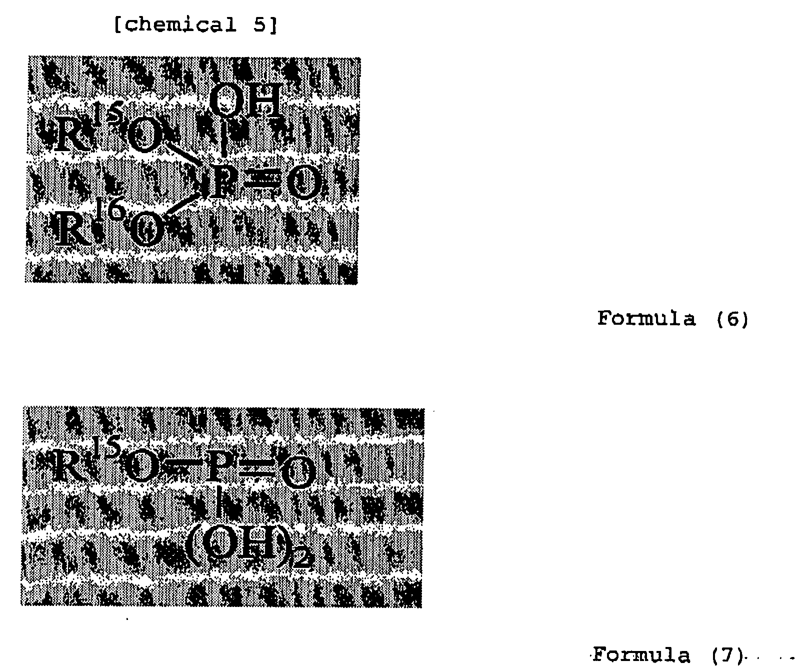

In the formulas (6) and (7), R¹⁵ and R¹⁶ each represents an alkyl group having 1 to 30 carbon atoms, and specific examples thereof include a methyl group, an ethyl group, an n-propyl group, an isopropyl group, an n-butyl group, an isobutyl group, an s-butyl group, a t-butyl group, various pentyl groups, various hexyl group, various heptyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, various octadecyl groups, various nonadecyl groups, various eicosyl groups, various heneicosyl groups, various docosyl groups, various tricosyl groups, various tetracosyl groups, various pentacosyl groups, various hexacosyl groups, various heptacosyl groups, various octacosyl groups, various nonacosyl groups, and various triacontyl groups, and R¹⁵ and R¹⁶ may be same or different each other. Among these, a methyl group is preferred.

Also the acidic phosphoric acid ester may form an amine salt, and examples of amine include a monosubstituted amine (primary amine), a di-substituted amine (secondary amine) and a tri-substituted amine (tertiary amine) represented by a following formula (8):

R¹⁷ₙNH₃₋ₙ Formula (8)

wherein R¹⁷ represents an alkyl group having 1 to 30 carbon atoms; n represents 1, 2 or 3; and, in the presence of plural R²³, plural R¹⁷ may be same or different one another. The alkyl group having 1 to 30 carbon atoms, represented by R¹⁷ in the formula (8), may be linear or branched as in R¹⁵ and R¹⁶ above. Among these, a dodecyl-substituted primary amine is particularly preferable.

The organic surfur-phosphor type compound means a material containing a phosphor atom and a sulfur atom, and includes not only a compound containing both a phosphor atom and a sulfur atom within the molecule such as a thiophosphate or a thiophosphite, but also a mixture of a compound containing a phosphor atom within the molecule and a compound containing a sulfur atom within the molecule.

As thiophosphate, a thiophosphate ester having a basic structure of a thiophosphoric acid ester, such as triphenylo phosphothionate (TPPT), may be employed.

As thiophosphite, an organic trithiophosphite represented by (RS)₃P may be utilized. Examples thereof include tributyl trithiophosphite and tri(2-ethylhexyl) trithiophosphite.

Also as the antiabrasive, a metal coupling agent such as an aluminum-based coupling agent or a titanium-based coupling agent, or carbon black may be employed. In particular, an addition of carbon black suppresses generation of a pontential difference between the clutch inner ring 31 and the clutch outer ring 32 under a current passing, as detailedly described in JP-A-2002-195277, thereby suppressing a white exfoliation of the raceway surface and the like by electrolysis of internally permeating water. Carbon black preferably has an average particle size of from 10 to 300 nm.

An amount of addition of such antiabrasive agent is, either singly or in a total amount in case of use in combination, preferably from 1 to 10 mass % of the total grease amount. The amount of addition of carbon black is preferably from 2 to 10 mass % of the total grease amount. In particular, a simultaneous addition of an organic phosphor-based compound and an organic phosphor-sulfur type compound improves the abrasion reducing effect and is therefore preferable. Such antiabrasive agent and the non-barium type antirust agent, having the exfoliation resistant effect, cooperate each other to further reduce the frictional abrasion in the sliding motion. Therefore, an amount of addition less than 1 mass % cannot sufficiently exhibit such effect. Also an amount of addition exceeding 10 mass % does not provide an increased effect but decreases other components in relative manner, whereby effects by other components are reduced.

As the antioxidant, preferred for example are aromatic amine compounds employed as the antioxidant for lubricating oils and resins. Among these, α-naphthylamines and diphenylamines are preferable.

As α-naphthylamines, those represented by a following formula (9) are preferable:

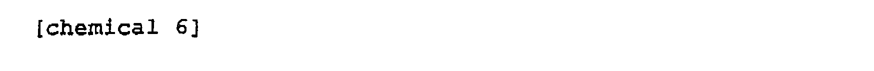

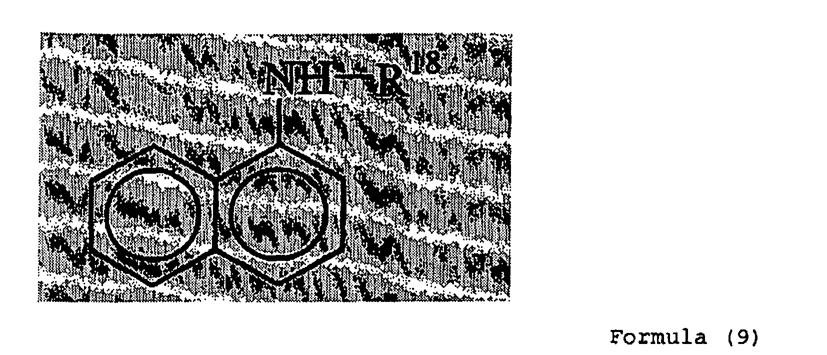

In the formula (9), R¹⁸ represents a hydrogen atom, or a group represented by a following formula (10), preferably a group represented by the following formula (10) :

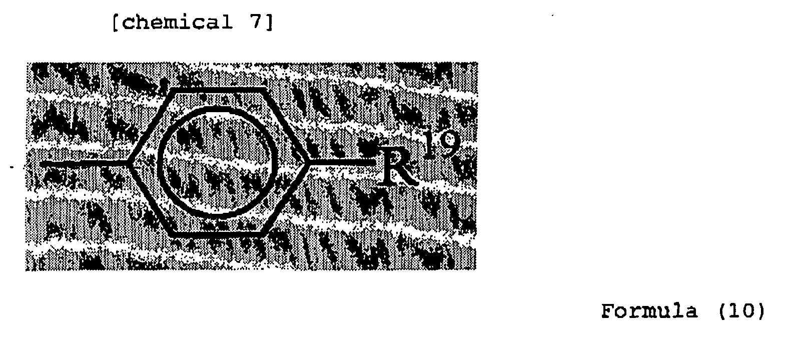

In the formula (10), R¹⁹ represents a hydrogen atom, or a linear or branched alkyl group having 1 to 16 carbon atoms. Examples of the alkyl group represented by R¹⁹ include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group and a hexadecyl group (these alkyl groups may be linear or branched), among which preferred is a branched alkyl group having 8 to 16 carbon atoms.

As diphenylamines, those represented by a following formula (11) are preferred:

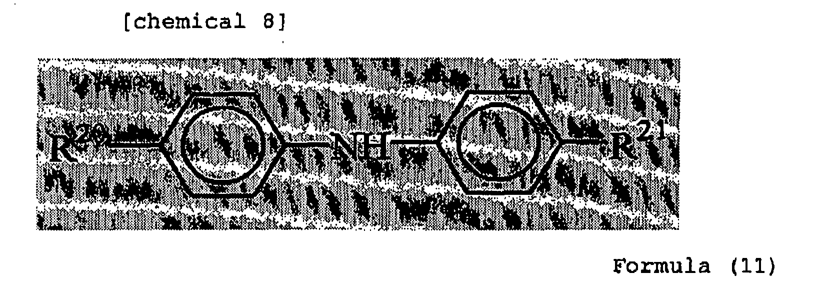

In the formula (11), R²⁰ and R²¹, which may be same or different each- other, each represents a hydrogen atom or an alkyl group having 1 to 16 carbon atoms, preferably an alkyl group having 1 to 16 carbon atoms. In a case where either one or both of R²⁰ and R²¹ are hydrogen atoms, a sludge deposition may be induced by an oxidation thereof. Examples of the alkyl group represented by R²⁰ and R²¹ include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group and a hexadecyl group (these alkyl groups may be linear or branched), among which preferred is a branched alkyl group having 3 to 16 carbon atoms.

In addition to the amine compounds represented by the formulas (9) and (11), N-n-butyl-p-aminophenol, 4,4'-tetramethyldiaminodiphenylmethane, or N,N-disalicylidene-1,2-propylenediamine may also be used.

Such amine compounds may be used singly or in a combination of plural kinds. The addition of an antioxidant provides a long service life by suppressing an oxidative deterioration of the base oil in the use at a high temperature, but an amount of addition less than 0.5 mass % of the total grease amount is unable to provide a sufficient effect.

In the grease composition, there may also be added, for example, an oiliness improving agent (such as a fatty acid or an animal or vegetable oil).

The grease composition preferably has a worked penetration of from 250 to 340. A worked penetration less than 250 results in an excessively hard grease composition, leading to drawbacks that the grease composition may not be delivered to necessary positions in sliding positions principally in the clutch, and that the motion of the locking/unlocking spring of the clutch is made slow. On the other hand, a worked penetration exceeding 340 results in an excessively soft grease composition, which tends to flow out for example by vibrations in the running.

### EXAMPLES

In the following, the present invention will be further clarified by examples and comparative examples, but the present invention is not restricted by the following examples.

### (Examples 1 - 8, Comparative Examples 1 - 2)

As shown in Tables 1 and 2, an amine (cyclohexylamine or p-toluidine) and a diisocyanate (MDI: 4,4'-diphenylmethane diisocyanate) were reacted in a base oil to synthesize a diurea. A grease composition was prepared by dispersing it in the base oil and, after addition of additives of predetermined amounts, by finishing in a 3-roll mill, and was subjected to various tests. As the base oil, there was employed a polyol ester (PE, Kaolube series, manufactured by Kao Corp.), an alkyl diphenyl ether (ADE, LB series, manufactured by Matsumura Oil Research Corp.), a poly-α-olefin (PAO, SHF series, manufactured by Exxon-Mobile Inc.) or a mineral oil.

### (1) Reciprocating dynamic friction test

The grease composition was subjected to a reciprocating dynamic friction test at a high speed, for evaluating the performance in a sliding state. Fig. 2 shows the structure of a reciprocating dynamic friction tester employed. At first, on a flat test plate 94 (made of SUJ2, HRC: 60 - 64), a grease composition to be tested was coated with a thickness of about 0.05 mm, then heated at 140°C for 2 hours by a heater 92, and was let to stand to the room temperature. Thereafter, a test was conducted by pressing a test ball 95 of a diameter of 10 mm to the test plate 94 and by causing, by means of a cam 97, the test ball 95 to execute a reciprocating motion (frequency 10 Hz, amplitude: 2 mm) for 30 minutes under a vertical load of 96 N. After the test, an abrasion trace (mm) on the test ball was measured. In Fig. 2, a symbol 93 indicates a thermocouple, for detecting the heating temperature by the heater 92. Also a symbol 96 indicates a load cell, for monitoring the reciprocating motion of the cam 97.

### (2) Low-temperature torque test

The grease composition was tested for a low-temperature property by a low-temperature torque test, specified in JIS K2220 5. 14. The test results are shown in Tables 1 and 2, with ratings of ⊚ for a braking power less than 15 N, ○ for a braking power equal to or larger than 15 N but less than 25 N, and × for a braking power equal to or larger than 25 N.

### (3) Evaporation loss test

A heat resistance of the grease composition was evaluated by taking 15 mg of the grease composition and measuring a weight loss at 160°C after 12 hours, in a thermogravimetry (TG) apparatus. The test results are shown in Tables 1 and 2, with ratings of ⊚ for a weight loss less than 4 % of the grease composition prior to the test, ○ for a weight loss equal to or larger than 4 % but less than 6 %, and × for a weight loss equal to or larger than 6 %.

### (4) Exfoliation resistance test

An exfoliation resistance test was conducted by fitting a one-way clutch-containing rotation transmission apparatus, similar to that shown in Fig. 1, on a rotary shaft S of an alternator, connecting the pulley 12 thereof to an actual engine through a belt, and rapidly accelerating and decelerating the engine. As the rolling bearing 2, a single-row deep-groove ball bearing (internal diameter: 17 mm, outer diameter: 47 mm, width: 14 mm) was employed, and 2.5 g of the grease composition of Examples and Comparative Examples were sealed. The test was conducted by a continuous rotation for 500 hours under a pulley load (load from the belt) of 1560 N, and under an engine revolution of 1000 to 6000 min⁻¹ (bearing revolution of 2400 to 13300 min⁻¹). A vibration generated in the one-way clutch-containing rotation transmission apparatus was measured in the course of test, and the test was terminated when the vibration exceeded a predetermined value (50 G), or when predetermined 500 hours elapsed. The test was conducted on 10 one-way clutch-containing rotation transmission apparatuses. After the test, presence/absence of exfoliation on the raceway surface of the rolling bearing 2 was confirmed, and a proportion of the one-way clutch-containing rotation transmission apparatuses showing an exfoliation is shown in Tables 1 and 2.

### (5) Antirust property test

A grease composition to be tested was sealed, in an amount of 2.7 g, in a single-row deep-groove ball bearing (internal diameter: 17 mm, outer diameter: 47 mm, width: 14 mm), then 0.3 cc of a 0.1% aqueous solution of sodium chloride were injected into the interior of the bearing, and the bearing was rotated after mounting a non-contact seal. Thereafter, the bearing was let to stand for 3 days under an environment of 60°C and a relative humidity of 70 %, and a state of the raceway surface of the inner ring of the bearing was observed. The test results are shown in Tables 1 and 2, with a rating as not acceptable when a rust generation was confirmed under a visual observation, and as acceptable otherwise.

**[Table 1]**

| | Example 1 | Example 2 | Example 3 | Example 4 | Example 5 |
|---|---|---|---|---|---|
| thickener (amine) | diurea (cyclohexylamine) | diurea (cyclohexylamine) | diurea (cyclohexylamine) | diurea (cyclohexylamine) | diurea (cyclohexylamine) |
| thickener content (mass %) | 18 | 18 | 18 | 18 | 16 |
| bass oil | PE | ADE | PAO | PE+ADE (5:5) | PE |
| antirust agent (amount) | sorbitan trioleate (2.5 mass %) zinc naphthenate (2.5 mass %) | sorbitan trioleate (2.5 mass %) zinc naphthenate (2.5 mass %) | sorbitan trioleate (2.5 mass %) zinc naphthenate (2.5 mass %) | sorbitan trioleate (25 mass %) zinc naphthenate (2.5 mass %) | sorbitan trioleate (2.5 mass %) zinc naphthenate (2.5 mass %) |
| antioxidant (amount) | phenyl-α-naphthylamine (1 mass%) | phenyl-α-naphthylamine (1 mass%) | phenyl-α-naphthylamine (1 mass %) | phenyl-α-naphthylamine (1 mass %) | phenyl-α-naphthylamine (1 mass %) |
| antiabrasive (amount) | ZnDTC (2 mass %) ZnDTP (1 mass%) | ZnDTC (2 mass %) ZnDTP(1 mass%) | ZnDTC (2 mass %) ZnDTP(1 mass %) | ZnDTC (2 mass %) ZnDTP (1 mass %) | carbon black (2 mass %) ZnDTP (1 mass%) |
| basic oil dyanmic viscosity (mm²/s @40°C) | 60 | 60 | 60 | 60 | 60 |
| worked penetration (NLGI No.) | No. 2 | No. 2 | No. 2 | No. 2 | No. 2 |
| abrasion trace diameter (mm) | 0.08 | 0.11 | 0.12 | 0.09 | 0.14 |
| evaluation of low-temperature property | ⊚ | ⊚ | ⊚ | ⊚ | ⊚ |
| evaluation of heat resistance | ○ | ⊚ | ⊚ | ⊚ | ⊚ |
| test for exfoliation resistance | 0/10 | 0/10 | 0/10 | 0/10 | 0/10 |
| test for antirust property | acceptable | acceptable | acceptable | acceptable | acceptable |

**[Table 2]**

| | Example 6 | Example 7 | Comparative Example 1 | Comparative Example 2 | Example 8 |
|---|---|---|---|---|---|
| thickener (amine) | diurea (cyclohexylamine) | diurea (cyclohexylamine) | diurea (cyclohexylamine) | diurea (cyclohexylamine) | diurea (p-toluidine) |
| thickener content (mass %) | 18 | 18 | 18 | 18 | 23 |
| base oil | PE | ADE | PE | mineral oil | PE |
| antirust agent (amount) | sorbitan trioleate (2.5 mass %) zinc naphthenate (2.5 mass %) | sorbitan trioleate (2.5 mass %) zinc naphthenate (2.5 mass %) | none | none | sorbitan trioleate (2.5 mass %) zinc naphthenate (2.5 mass %) |
| antioxidant (amount) | phenyl-α-naphthylamine (1 mass %) | phenyl-α-naphthylamine (1 mass%) | phenyl-α-naphthylamine (1 mass %) | phenyl-α-naphthylamine (1 mass %) | phanyl-α-naphthylamine (1 mass %) |
| antiabrasive (amount) | ZnDTP (1 mass %) | ZnDTP (1 mass %) | ZnDTC (2 mass %) ZnDTP (1 mass %) | ZnDTC (2 mass %) ZnDTP (1 mass %) | none |
| basic oil dyanmic viscosity (mm²/s@40°C) | 60 | 60 | 60 | 60 | 60 |
| worked penetration (NLGI No.) | No. 2 | No. 2 | No. 2 | No. 2 | No. 2 |
| abrasion trace diameter (mm) | 0.19 | 0.18 | 0.20 | 0.19 | 0.29 |
| evaluation of low-temperature property | ⊚ | ⊚ | ⊚ | ○ | ○ |
| evaluation of heat resistance | ⊚ | ⊚ | ⊚ | × | ○ |
| test for exfoliation resistance | 4/10 | 3/10 | 1/10 | 1/10 | 3/10 |
| test for antirust property | acceptable | acceptable | not acceptable | not acceptable | acceptable |

From Tables 1 and 2, it is understood that the grease composition of the present invention, utilizing a synthetic oil as the base oil, and an urea compound as the thickener and containing a non-barium type antirust agent, provides an excellent lubricating performance within a wide temperature range from a low temperature to a high temperature, and also an excellent antirust property. This is presumably based on a fact that the polar groups of carboxylic acid salt and the ester compound of the antirust agent are adsorbed in a highly dense state on the metal surface, thereby protecting the metal surface.

Also Examples 1 to 5, in which the antiabrasive was added, did not show any exfoliation in the exfoliation resistance test. On the other hand, in Examples 6 to 8 and Comparative Examples 1 and 2, in which the antiabrasive was not added, showed exfoliations. It was thus confirmed that the addition of antiabrasive could suppress the exfoliation even under the vibrating conditions. Also the result of the reciprocating dynamic friction test was different depending on the presence or absence of addition of the antiabrasive, and it was confirmed that the addition of the antiabrasive could also suppress the abrasion by the sliding friction. It was confirmed that this effect was particularly large when ZnDTC was used as the antiabrasive, and that PE employed as the base oil (Example 1) showed an excellent antiabrasive effect though the heat resistance was somewhat inferior in comparison with other base oils.

### (Examples 9 to 21, and Comparative Examples 3 to 4)

Grease compositions were prepared in the same manner as above, with formulations shown in Tables 3 and 4, and were subjected to (6) a low-temperature torque test, (7) a bearing durability test, (8) a high-speed reciprocating test, (9) a bearing exfoliation test and (10) a bearing antirust test, explained below. Results are shown in Tables 3 and 4.

### (6) Low-temperature torque test

Test was executed according to JIS K 22205.14, and a starting torque at -30°C was measured.

### (7) Bearing durability test

A test bearing #6204VV, manufactured by NSK Ltd., with 1 g of a grease composition sealed therein, was continuously rotated for a target time of 500 hours under a pre-load of 500 kgf, an environmental temperature of 160°C and 6000 min⁻¹, and a case that the rotation continued without abnormality even after rotation for 500 hours was rated as acceptable.

### (8) High-speed reciprocating test

Diameter of abrasion trace on the bass surface was measured in the same manner as in the test (1) above, and a diameter of 0.25 mm or less was rated as acceptable.

### (9) Exfoliation resistance test

A time required to exceed the predetermined value (50 G) was measured in the same manner as in the test (5) above. A case not exceeding the above-mentioned vibration value after the lapse of 500 hours was rated as acceptable. Also after the test, presence/absence of the exfoliation of the steel material of the bearing was observed visually.

### (10) Bearing antirust test

A test bearing was prepared by sealing, in a single-row deep-groove ball bearing (internal diameter: 17 mm, outer diameter: 47 mm, width: 14 mm) with a rubber seal, a grease composition so as to occupy 50 % of the volume of the bearing space. After the sealing, the bearing was rotated for 30 seconds at a revolution of 1800 min⁻¹, and, after an injection of 0.5 ml of a 0,5 mass % salt water into the bearing, was rotated again for 30 seconds at a revolution of 1800 min⁻¹. Then the test bearing was let to stand for 48 hours in a thermostat tank maintained at 80°C and 100 %RH, then the test bearing was disassembled and the rust state generated on the raceway surface was observed visually. The criteria of evaluation were as follows, in which #7 to #5 were taken as satisfactory antirust property and #4 to #1 were taken as unsatisfactory antirust propert.y:
#7: no rust generation
#6: stain-like small rust generated
#5: spot-like stain present with a diameter of 0.3 mm or less
#4: spot-like stain present with a diameter exceeding 0.3 mm but equal to or less than 1.0 mm
#3: spot-like stain present with a diameter exceeding 1.0 mm but equal to or less than 5.0 mm
#2: spot-like stain present with a diameter exceeding 5.0 mm but equal to or less than 10.0 mm
#1: stain generated on substantially entire raceway surface.

**[Table 3]**

| | | Example 9 | Example 10 | Example 11 | Example 12 | Example 13 | Example 14 | Example 15 | Example 16 |
|---|---|---|---|---|---|---|---|---|---|
| thickener cyclohaxylamine amine ratio | | 10 | 10 | 10 | 10 | 10 | 10 | 10 | 10 |
| thickener amount (mass%) | | 19 | 19 | 16 | 24 | 19 | 19 | 19 | 19 |
| base oil | | ester oil | ester oil | ester oil | ester oil | ester oil | ester oil | ester oil | aster oil |
| base oil dynamic viscosity (mm²/s@40°C) | | 33 | 33 | 33 | 33 | 25 | 47 | 33 | 33 |
| base oil flow point (°C) | | -50 | -50 | -50 | -50 | -55 | -45 | -50 | -50 |
| antioxidant | dioctyldiphenylamine | 2 | | 2 | | 2 | 2 | 2 | 2 |
| | phenothiazine | | 2 | | 2 | | | | |
| antirust agent | zinc naphthenate | 2 | | 2 | | 2 | 2 | 2 | 2 |
| | calcium naphthenate | | 2 | | 2 | | | | |
| | barium sulfonate | | | | | | | | |
| | zinc sulfonate | | | | | | | | |
| antiabrasive | MoDTP | 2 | | 2 | 2 | 2 | 2 | 2 | 2 |
| | MoDTC | | 2 | | | | | | |
| worked penetration | | 270 | 280 | 330 | 250 | 290 | 265 | 275 | 275 |
| low-temperature torque (N-cm: -30°C start) | | 11 | 12 | 7 | 15 | 10 | 13 | 11 | 11 |
| bearing durability test (hr) | | 500 or higher | 500 or higher | 500 or higher | 500 or higher | 500 or higher | 500 or higher | 500 or higher | 500 or higher |
| reciprocating abrasion trace diameter (mm) | | 0.25 | 0.25 | 0.22 | 0.23 | 0.25 | 0.25 | 0.25 | 0.21 |
| bearing exfoliation test (hr) | | 500 or higher | 500 or higher | 500 or higher | 500 or higher | 500 or higher | 500 or higher | 500 or higher | 500 or higher |
| bearing antirust test (evaluation point) | | #6 | #6 | #6 | #6 | #6 | #6 | #6 | #6 |

**[Table 4]**

| | | Comparative Example 3 | Example 18 | Example 19 | Example 20 | Comparative Example 4 | Example 21 |
|---|---|---|---|---|---|---|---|
| thickener amine ratio | cyclohexylamine | 10 | 10 | 10 | 10 | 10 | 10 |
| thickener amount (mass %) | | 18 | 18 | 18 | 24 | 19 | 19 |
| base oil | | ester oil | ester oil | ether oil | PAO | ester oil | ester oil |
| base oil dynamic viscosity (mm²/s@40°C) | | 33 | 33 | 33 | 33 | 25 | 47 |
| base oil flow point (°C) | | -50 | -50 | -50 | -57 | -55 | -45 |
| antioxidant | dioctyldiphenylamine | | 2 | 2 | | 2 | 2 |
| | phenothiazine | 2 | | | 2 | | |
| antirust agent | zinc naphthenate | | | 2 | | | 2 |
| | calcium naphthenate | | | | 2 | | |
| | barium sulfonate | 1.5 | | | | | |
| | zinc sulfonate | | 1 | | | | |
| antiabrasive | MoDTP | | | 2 | 2 | 2 | |
| | MoDTC | | 2 | | | | |
| worked penetration | | 280 | 280 | 330 | 250 | 290 | 265 |
| low-temperature torque (N.cm: 30°C start) | | 11 | 12 | 40 | 10 | 10 | 13 |
| bearing durability test (hr) | | 500 or higher | 500 or higher | 500 or higher | 400 | 500 or higher | 500 or higher |
| reciprocating abrasion trace diameter (mm) | | 0.25 | 0.25 | 0.22 | 0.23 | 0.25 | 0.35 |
| bearing exfoliation test (hr) | | 250 | 100 | 540 or higher | 500 or higher | 300 or higher | 500 or higher |
| bearing antirust test (evaluation point) | | #4 | #4 | #6 | #6 | #1 | #6 |

In the tables, cyclohexylamine, phenothiazine and dioctyldiphenylamine are test grade products of Tokyo Ohka Kogyo Co., zinc naphthenate is a reagent of Showa Chemical Co., calcium naphthenate is a reagent of Showa Chemical Co., barium sulfonate is NASL BSN of King Ltd., MoDTP is Sakuralube 300 of Asahi Denka Co., and MoDTC is Sakuralube 165 of Asahi Denka Co.

From Tables 3 and 4 it is identified that the grease compositions of Examples of the present invention provide an excellent lubricating performance from a low temperature to a high temperature, and provide an antirust ability equal to or higher than in case of utilizing barium sulfonate as the antirust agent (Comparative Example 3). It is also identified that the addition of antiabrasive improves durability with little abrasion. In Example 21 without the addition of antiabrasive, the abrasion trace was somewhat larger.

Also an ether oil employed as the base oil (Example 19) increased the low-temperature torque, and a poly-α-olefin oil (PAO) employed as the base oil (Example 20) resulted in an inferior durability.

### (Examples 22 to 28, and Comparative Example 5)

Grease compositions were prepared in the same manner as above, with formulations shown in Table 5, and were subjected to (6) a low-temperature torque test, (7) a bearing durability test, and (8) a high-speed reciprocating test, as described above. However, in the (6) low-temperature torque test, the results were evaluated as (⊚) for a starting torque less than 15 N, (○) for a starting torque of 15 N or larger but less than 25 N, and (×) for a starting torque equal to or higher than 25 N. In the (8) high-speed reciprocating test, an abrasion trace diameter of 0.25 mm or less was rated as acceptable. Respective results are shown in Table 5.

The grease compositions were further subjected to (11) a heat resistance test, shown below. Results are also shown in Table 5.

### (11) Heat resistance test

The to be tested grease was coated on a Petri dish, and a total acid value after standing for 250 hours at 150°C was measured and compared with the total acid value prior to standing. An increase of 3 mg KOH/g or less was rated as acceptable.

**[Table 5]**

| | | Example 22 | Example 23 | Example 24 | Example 25 | Example 26 | Example 27 | Comparative Example 5 | Example 28 |
|---|---|---|---|---|---|---|---|---|---|
| thickener | | diurea | diurea | diurea | diurea | diurea | diurea | diurea | diurea |
| amine type | | cyclohexylamine | cyclohexylamine | cyclohexylamine | cyclohexylamine | cyclohexylamine | cyclohexylamine | cyclohexylamine | p-toludine |
| thickener amount (mass %) | | 18 | 18 | 18 | 18 | 16 | 18 | 18 | 23 |
| base oil | | PE | PE | PE | PE | PE | PE | mineral oil | PE |
| base oil dynamic viscosity (mm²/s@40°C) | | 40 | 65 | 32 | 60 | 40 | 40 | 60 | 40 |
| base oil flow point (°C) | | -45 | -40 | -50 | -40 | -50 | -50 | -30 | -45 |
| antioxidant | phenyl-α-naphthylamine | 1 | 1 | 1 | 1 | 1 | 1 | 1 | 1 |
| antirust agent | sorbitan trioleate | 2.5 | 2.5 | 2.5 | 25 | 2.5 | 2.5 | | 2.5 |
| | zinc naphthenate | 2.5 | 2.5 | 2.5 | 2.5 | 2.5 | 2.5 | | 25 |
| antisbrasive | MoDTP | 2 | | | | | | 2 | |
| | sulfur-phosphor compound A | | 2 | | | | | | |
| | sulfur-phosphor compound B | | | 2 | | | | | |
| | titanium coupling agent | | | | 2 | | | | |
| | aluminum coupling agent | | | | | 2 | | | |
| worked penetration | | No. 2 | No. 2 | No. 2 | No. 2 | No. 2 | No. 2 | No. 2 | No. 2 |
| low-temperature torque (N·cm -30°C start) | | ⊚ | ⊚ | ⊚ | ⊚ | ⊚ | ⊚ | Δ | ⊚ |
| bearing durability test (hr) | | 500 or higher | 500 or higher | 500 or higher | 500 or higher | 500 or higher | 500 or higher | 500 or less | 500 or higher |
| high-speed reciprocating dynamic friction test | | acceptable | acceptable | acceptable | acceptable | acceptable | not acceptable | acceptable | not acceplable |
| heat resistance test | | acceptable | acceptable | acceptable | acceptable | acceptable | acceptable | not acceptable | acceptable |
| Note 1) PE: polyol ester oil | | | | | | | | | |
| Note 2) sulfur-phosphor compound A: IRGALUBE 232 manufactured by Ciba Specially Chemicals Ltd. | | | | | | | | | |
| Note 3) sulfur-phosphor compound B: IRGALUBE TPPT manufactured by Ciba Specialty Chemicals Ltd. | | | | | | | | | |

As shown in Table 5, Comparative Example 5 not containing the antirust agent is inferior in the durability and the heat resistance. On the other hand, it is identified that the grease compositions of Examples of the present invention are excellent in the lubricating ability from a low temperature to a high temperature and in the antirust property. Also absence of antiabrasive (Examples 27 and 28) resulted in an inferior exfoliation resistance.

## Claims

1. A one-way clutch-containing rotation transmission apparatus comprising a pair of rotary members disposed concentrically, a rolling bearing disposed between mutually opposed peripheral surfaces of the pair of rotary members and serving to support the pair of rotary members so as to be freely rotatable each other, and a one-way clutch disposed between the mutually opposed peripheral surfaces of the pair of rotary members and serving to transmit a rotary power for rotating one of the rotary members with respect to the other only in a predetermined direction, wherein
a grease composition, containing a synthetic oil as a base oil, also at least either of an urea compound and a metal soap as a thickener and a non-barium type antirust agent in an amount of from 1.0 to 10 mass % with respect to the entire amount of the grease, is sealed in the rolling bearing and the one-way clutch.

2. The one-way clutch-containing rotation transmission apparatus according to claim 1, wherein
the non-barium type antirust agent is formed by a combination of plural kinds, in which each non-barium type antirust agent is present in an amount of from 0.5 to 9.5 mass % of the entire amount of the grease.
